# EUROPÄISCHE PATENTSCHRIFT

(11) **EP 0 991 689 B1**
(45) Veröffentlichungstag und Bekanntmachung des Hinweises auf die Patenterteilung: **26.11.2003**
(21) Anmeldenummer: 98919268.7
(22) Anmeldetag: 14.04.1998
(51) Int. Cl.: C08G 63/20, D01F 6/84

(54) **FADENBILDENDE KETTENVERZWEIGTE POLYESTER UND COPOLYESTER**
THREAD-FORMING, CHAIN-BRANCHED POLYESTERS AND COPOLYESTERS
POLYESTERS ET COPOLYESTERS A RAMIFICATIONS DE CHAINES GENERATEURS DE FILS

(30) Priorität: 17.04.1997 DE 19715986
(43) Veröffentlichungstag der Anmeldung: 12.04.2000
(73) Patentinhaber: Acordis Industrial Fibers GmbH, 42103 Wuppertal (DE)
(72) Erfinder: HÜTHER, Hans, Georg, Gustav, Bernhard, D-47533 Kleve (DE); DE JONG, Cees, NL-6971 WJ Brummen (NL); SCHILO, Diederich, D-63911 Klingenberg (DE); SEIDEL, Ulf, D-63814 Mainaschaff (DE); VIETH, Christian, D-63939 Wörth (DE); ZENGEL, Hans, Georg, D-63839 Kleinwallstadt (DE)
(74) Vertreter: Fett, Günter
(86) Internationale Anmeldenummer: EP9802185
(87) Internationale Veröffentlichungsnummer: WO98047936

(56) Entgegenhaltungen:
- EP-A- 0 650 994
- DE-A- 2 728 095
- DE-A- 4 443 648
- GB-A- 1 535 885
- US-A- 5 434 241
- CHEMICAL ABSTRACTS, vol. 110, no. 12, 20.März 1989 Columbus, Ohio, US; abstract no. 97059, XP002074783 & CS 244 359 B (P. SEDLACEK ET AL.)
- DATABASE WPI Section Ch, Week 7635 Derwent Publications Ltd., London, GB; Class A23, AN 76-66052X XP002074784 & JP 51 025 400 B (TEIJIN LTD) , 30.Juli 1976

## Beschreibung

Die Erfindung betrifft die Verwendung von fadenbildenden, kettenverzweigten Polyestern und Copolyestern mit einem relativen Molekulargewicht von >10000, die sehr geringe Mengen Kettenverzweigungsmittel enthalten, zum Schnellspinnen von textilen und industriellen Garnen. Weiterhin betrifft die Erfindung ein Verfahren zum Schnellspinnen von textilen und industriellen Garnen, dem die Bildung von fadenbildenden, kettenverzweigten Polyestern und Copolyestern mit einem relativen Molekulargewicht von >10000, die sehr geringe Mengen Kettenverzweigungsmittel enthalten, vorgeschaltet ist.

Kettenverzweigte Polyester und Copolyester, die sehr geringe Mengen an Dipentaerythrit und/oder Tripentaerythrit als Kettenverzweigungsmittel enthalten, sind aus der CS-A-244 359 bekannt. In dieser Schrift werden Polyesterfasern auf der Basis von Terephthalsäure und Ethylenglycol beschrieben, die mit 0,01 bis 3,0 mol-% Dipentaerythrit oder Tripentaerythrit modifiziert sind. Die derart modifizierten Polyester werden nach dem Trocknen gesponnen und verstreckt. Angaben über die Spinnbedingungen, wie insbesondere die Aufwickelgeschwindigkeit, sind der CS-A-244 359 nicht zu entnehmen.

US-A-5 434 241 beschreibt bioabbaubare aliphatische Polyester, wie Polymilchsäure, mit einem Molekulargewicht von größer als 30000. Die Polymilchsäuren enthalten z.B. Dipentaerythrit oder Tripentaerythrit als Kettenverzweiger im Bereich von 0,01 bis 2 Gewichts-%. US-A-5 434 241 macht weder Aussagen zu Verspinnungen, noch dazu, ob hierbei überhaupt "fadenbildende" Polyester gebildet werden.

EP-A-650994 ist auf einen Prozeß zur Bildung von Filmen aus aliphatischen Polyestern unter Zugabe von 0,01 bis 1 mol-% einer multifunktionellen Komponente, wie z.B. Dipentarythrit, gerichtet. Es sind dieser Schrift keine Aussagen zu Spinn- bzw. Extrusionsgeschwindigkeiten zu entnehmen.

Die britische Patentanmeldung GB-A-1 535 885 beschreibt die Addition von mindestens 0,03 Gewichtsprozent Verbrückungsreagenzien, wie z.B. Dipentaerythrit, zu Polyethylenterephthalat während der Bildung des Polyesters. Das Polymer wird z.B. bei 1800 m/min zu Stapelfasern versponnen. Es werden keine Aussagen über höhere Spinngeschwindigkeiten getätigt.

JP-A-51 025 400 beschreibt den Einsatz relativ hoher Konzentrationen von 0,5 bis 1,0 mol-% an mehrfunktionellen Verbindungen, wie Dipentaerythrit, als Modifizierungsmittel in Polyester zur Verbesserung von dessen Wärmebeständigkeit.

Die Verwendung von fadenbildenden, kettenverzweigten Polyestern und Copolyestern mit einem relativen Molekulargewicht von >10000 beim Schnellspinnen von POY-Garnen (POY = Pre Oriented Yarn) ist nach der DE-OS 27 28 095 bekannt. Diese Polyester und Copolyester enthalten sehr geringe Mengen Pentaerythrit oder andere polyfunktionelle Verbindungen, wie Glycerin, Trimethylolpropan oder Mellitsäure (= Benzolhexacarbonsäure), als Kettenverzweigungsmittel. Diese kettenverzweigten Polyester und Copolyester unterscheiden sich von den noch älteren kettenverzweigten Polyestern und Copolyestern, die die Aufgabe lösten, insbesondere eine bessere Anfärbbarkeit oder eine geringere Pillingneigung der Polyesterfasern zu erreichen (= US-A-2 895 946, US-A-2 905 657, US-A-3 033 824, US-A-3 669 935, US-A-3 669 933, US-A-3 671 494, US-A-3 668 187, US-A-3 668 188, US-A-3 669 925 und US-A-3 576 773), dadurch, daß sie oft zwingend geringere Mengen an polyfunktionellen Verbindungen enthalten müssen. Wenn beispielsweise Pentaerythrit als Kettenverzweigungsmittel verwendet wird, ist für Antipillingfasern oder besser anfärbbare Polyesterfasern ein Zusatz von 0,1 bis 1 Molprozent erforderlich, was einer Zusatzmenge von 708 bis 7080 ppm entspricht. POY-Garne erfordern dagegen eine Zusatzrnenge von 100 bis 625 ppm Pentaerythrit.

Von allen untersuchten polyfunktionellen Verbindungen ist nach der DE-OS 27 28 095 Pentaerythrit als Kettenverzweigungsmittel am besten geeignet. Mit diesem tetrafunktionellen Verzweigungsmittel erhält man beim Schnellspinnen von Polyestern und Copolyestern nicht nur bessere Resultate als mit sämtlichen trifunktionellen Verzweigungsmitteln, sondern sogar auch bessere als mit der hexafunktionellen Mellitsäure, was natürlich die Auffassung stabilisierte, daß mit der Verwendung von Pentaerythrit das beste Verzweigungsmittel für den in Rede stehenden Zweck gefunden worden war. Dennoch waren derartige verzweigte Polyester und Copolyester schon zum damaligen Zeitpunkt noch verbesserungsbedürftig. Hohe Restdehnungen und damit Produktivitätserhöhungen erzielt man nämlich nur mit den relativ hohen Zusatzmengen dieses Kettenverzweigungsmittels im Bereich von 500 bis 625 ppm, während bei niedrigeren Zusatzmengen von 100 bis 200 ppm die Restdehnungen und damit die daraus resultierenden Produktivitätserhöhunqen erheblich abfallen (vgl. Tabelle I der DE-OS 27 28 095). Bei hohen Zusatzmengen an Pentaerythrit unterscheiden sich aber wegen des höheren Verzweigungsgrades der entsprechenden Polyester die Eigenschaften der weiterverarbeiteten POY-Garne schon zu sehr von den konventionellen Polyestergarnen, deren geschätzten und bewährten Eigenschaften man naturgemäß weitgehend zu erhalten wünscht, und es stellen sich insbesondere ab Verspinnungsgeschwindigkeiten von 4023 m/min unzumutbare Wechselhaftigkeiten der Garneigenschaften ein (vgl. Tabelle III der DE-OS 27 28 095). Daher werden in der industriellen Praxis für das Schnellspinnen tatsächlich nur 110 - < 200 ppm Pentaerythrit zur Modifizierung von Polyethylenterephthalat angewandt.

Es wurde daher in der Technik noch ein anderes Verfahrensprinzip entwickelt, um Polyester und Copolyester mit hohen Aufwikkelgeschwindigkeiten zu POY-Garnen mit erhöhten Restdehnungen zu verspinnen. Die EP-0 047 464 schlägt zu diesem Zweck vor, den Polyestern und Copolyestern vor dem Verspinnen 0,2 bis 10 Gew.%, vorzugsweise 0,5 bis 6 Gew.%, definierte thermoplastische Polymere homogen einzuverleiben, vorzugsweise Poly(4-methyl-1-penten) und Polymethacrylsäure-alkylester, deren Alkylrest aus 1 bis 5 C-Atomen besteht. Die damit erreichten Restdehnungen und Produktivitätszuwächse sind höher als die, die man auf der Basis der verzweigten Polyester erzielen kann. Es ist aber zu beachten, daß ein objektiver Vergleich nicht nur wegen der vergleichsweise sehr großen Zusatzmengen an Polymeren unmöglich ist, sondern auch deshalb, weil zumindest in den mittleren und höheren Gew.%-Bereichen der zugesetzten Polymeren, in denen sich naturgemäß die höheren und höchsten Dehnungszuwächse einstellen, in Wirklichkeit schon typische Polymer-Blends versponnen werden.

Zur Beseitigung der daraus resultierenden Nachteile schlug daher die EP-0 631 638 vor, den Polyestern und Copolyestern bevorzugt nur 0,3 bis 1,0 Gew.% zu 50 bis 90% imidisierte Polymethacrylsäure-alkylester, deren Estergruppe einen Alkohol mit 1 bis 6 C-Atomen enthält, einzuverleiben, die in den besagten Polyestern nur teilweise löslich sind und in diesen überwiegend in Form von Einlagerungen vorliegen. Mit dieser Verfahrensweise gelang es, POY-Garne mit Restdehnungen zu erhalten, die die aus mit 100 bis 200 ppm Pentaerythrit verzweigten Polyestern hergestellten POY-Garnen mitunter ebenfalls übertreffen.

Die vorliegende Erfindung stellt sich die Aufgabe, fadenbildende, kettenverzweigte Polyester und Copolyester mit einem relativen Molekulargewicht von > 10000 für das Schnellspinnen von textilen und industriellen Garnen zu finden, die bei möglichst geringen ppm-Mengen des Kettenverzweigungsmittels höhere Restdehnungen ergeben als die bekannten, mit Pentaerythrit kettenverzweigten Polyester und Copolyester.

Überraschend wurde gefunden, daß die erfindungsgemäß gestellte Aufgabe durch die Verwendung von fadenbildenden, kettenverzweigten Polyestern und Copolyestern gelöst wird, bei denen man während der Polyesterherstellung den polyesterbildenden Ausgangskomponenten 50-500 ppm eines oder mehrerer Kettenverzweigungsmittel der allgemeinen Formel 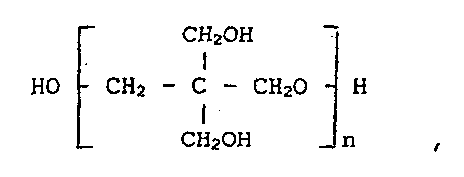 worin n = 2-4 bedeutet, zugefügt hat. Da die hexafunktionelle Mellitsäure zum Erhalt der gleichen Restdehnungen in höherer ppm-Menge in Polyethylenterephthalat einkondensiert werden muß als das tetrafunktionelle Pentaerythrit (vgl. Tabelle IV auf Seite 33 der DE-OS 27 28 095), war nicht zu erwarten gewesen, daß die im Rahmen der vorliegenden Erfindung verwendeten Kettenverzweigungsmittel trotz ihrer 6, 8 und 10 reaktionsfähigen Gruppen pro Molekül ausgerechnet den umgekehrten Effekt zeigen (vgl. Tabellen 1-14 des experimentellen Teils dieser Erfindung) , was sie für einen Einsatz in den erwünschten und bevorzugt in Betracht kommenden niedrigeren ppm-Mengenbereichen prädestiniert. Als vorteilhafter technischer Nebeneffekt stellt sich darüber hinaus mit wachsenden Einsatzmengen der im Rahmen der vorliegenden Erfindung verwendeten Kettenverzweigungsmittel eine stets größer werdende Verkürzung der Polykondensationszeit bei der Synthese der Polyester ein, die im Bereich von 50 bis 500 ppm an Kettenverzeigungsmitteln, z.B. bei der Synthese des zur erfindungsgemäßen Verwendung modifizierten Polyethylenterephthalats, etwa 10 bis 30% beträgt.

In den polyesterbildenden Ausgangskomponenten können also gegebenenfalls gleichzeitig Dipentaerythrit, Tripentaerythrit und Tetrapentaerythrit einkondensiert werden oder jeweils nur eine der möglichen stofflichen Teilmengen aus der genannten stofflichen Dreierkombination, die insbesondere auch die Einkondensation nur eines der drei genannten Kettenverzweigungsmittel einschließen. Die Einsatzmenge der Kettenverzweigungsmittel kann im allgemeinen von 50-500 ppm schwanken, wobei die für einen konkreten Einsatzzweck jeweils tatsächlich in Betracht kommende Einsatzmenge insbesondere in Abhängigkeit von dem oder den gewählten konkreten Kettenverzweigungsmitteln und ihren molaren Verhältnissen in diesem Bereich nicht unerheblich variieren kann. Da Tripentaerythrit und Tetrapentaerythrit geringere molare Einsatzmengen erfordern als Dipentaerythrit, kann jedoch der Fachmann je nach der erwünschten qualitativen chemischen Zusammensetzung der Kettenverzweigungsmittel, der Art der zu modifizierenden Polyester, der angestrebten Quantität der aus der Erhöhung der Restdehnung resultierenden Produktivitätserhöhung und den gewünschten Garneigenschaften durch einfache Probierversuche die jeweils für ihn in Betracht kommende Menge leicht ermitteln.

Bevorzugt verwendete Polyester und Copolyester werden dadurch erhalten, daß man in den polyesterbildenden Ausgangskomponenten 80-350 ppm und insbesondere 100-250 ppm Dipentaerythrit oder 50-200 ppm Tripentaerythrit oder Tetrapentaerythrit als Kettenverzweigungsmittel einkondensiert, wobei diese den polyesterbildenden Ausgangskomponenten grundsätzlich während der Polyesterherstellung hinzugefügt werden.

Als polyesterbildende Ausgangskomponenten werden solche Diole und Dicarbonsäuren bzw. Dicarbonsäurederivate, wie Dicarbonsäurediester, bevorzugt, die zur Bildung von Polyethylenterephthalat, Polypropylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) oder deren Mischpolyester auf der Basis hoher Homopolyester-Anteile von mindestens 90 Molprozent führen. Die restlichen Dicarbonsäure- und Diolkomponenten der.zuletzt erwähnten Mischpolyester können in Mengen bis zu 10 Molprozent die bei der Herstellung verstreckter Polyestergebilde üblichen Co-Komponenten, wie beispielsweise Isophthalsäure, p,p'-Diphenyldicarbonsäure, alle möglichen Naphthalindicarbonsäuren, Hexahydroterephthalsäure, Adipinsäure, Sebacinsäure und Glykole, wie Trimethylen-, Tetramethylen-, Hexamethylen- und Dekamethylenglykol, sein.

Da die erfindungsgemäß verwendeten kettenverzweigten Polyester und Copolyester insbesondere auch als modifizierte Homopolyester und Copolyester der oben genannten oder in Anspruch 11 aufgeführten Arten aufgefaßt werden können, ist es noch nicht einmal erforderlich, zu ihrer Herstellung die Herstellungsweise der betreffenden Homopolyester und Copolyester, wie Umesterungs- und Polykondensationsbedingungen, abzuändern. Die einzige unterschiedliche Maßnahme besteht darin, daß die Kettenverzweigungsmittel den entsprechenden polyesterbildenden Ausgangskomponenten während der ansonsten in üblicher Weise erfolgenden Polyesterherstellung in den erforderlichen ppm-Mengen hinzugefügt werden. Dies sei anhand des im Rahmen der Erfindung besonders bevorzugt verwendeten kettenverzweigten Polyesters geschildert, der dadurch erhalten wird, daß man das oder die im Rahmen der Erfindung verwendeten Kettenverzweigungsmittel den polyesterbildenden Ausgangskomponenten zufügt, die zur Bildung von Polyethylenterephthalat führen.

So kann die Herstellung von Polyethylenterephthalat in bekannter Weise in zwei Reaktionsstufen erfolgen. Die erste Reaktionsstufe, die kontinuierlich oder diskontinuierlich durchgeführt werden kann, besteht in der Umesterung von Dimethylterephthalat mit Ethylenglykol zu Bis-(2-hydroxyethyl)-terephthalat unter Verwendung von Umesterungskatalysatoren bei z.B. 150-200° C oder in der Direktveresterung der Terephthalsäure mit Ethylenglykol bei etwa 260° C unter Druck, die im allgemeinen keinen Katalysator erfordert und bei der ebenfalls Bis-(2-hydroxyethyl)-terephthalat gebildet wird. Durch Oligokondensationsreaktionen, die bereits unter den Umesterungsbedingungen und Direktveresterungsbedingungen erfolgen, werden daneben auch in mehr oder weniger großer Menge lineare Oligomere des Bis-(2-hydroxyethyl)-terephthalats gebildet. Eine bevorzugte Ausführungsform zur erfindungsgemäßen Verwendung besteht darin, daß man das oder die Kettenverzweigungsmittel vor oder während der Umesterungsreaktion oder der Direktveresterung den polyesterbildenden Ausgangskomponenten, also im vorliegenden Fall dem Dimethylterephthalat und Ethylenglykol oder der Terephthalsäure und dem Ethylenglykol, so zufügt, daß ein gleichmäßig reagierendes Reaktionsgemisch entstehen kann. Nach der erfolgten Umesterung ist es vorteilhaft, vorhandene Umesterungskatalysatoren in an sich bekannter Weise durch Zugabe von einer oder mehreren Phosphorverbindungen zu blockieren. Als Blockierungsmittel kommen insbesondere Carbethoxy-methyl-diethylphosphonat, Di(polyoxyethylen)hydroxy-methylphosphonat, Tetraisopropyl-methylen-diphosphonat, Phosphonoessigsäureethylester und/oder H₃PO₄ in Betracht, wobei eine zugegebene P-Konzentration von 30-50 ppm in der Regel ausreichend ist.

Wird die Herstellung von Bis-(2-hydroxyethyl)-terephthalat und dessen Oligomeren durch Anlagerung von Ethylenoxid an Terephthalsäure durchgeführt, so stellen naturgemäß Terephthalsäure und Ethylenoxid die polyesterbildenden Ausgangskomponenten dar. Der Begriff polyesterbildende Ausgangskomponenten schließt grundsätzlich alle Dicarbonsäure- und Diolderivate ein, beispielsweise auch Dicarbonsäurechloride oder Dioldiacetate, die geeignet sind, zur Bildung der an sich bekannten Polyester und Copolyester verwendet zu werden, die ihrerseits während der Polyester- und Copolyestersynthese mittels der im Rahmen der Erfindung eingesetzten Kettenverzweigungsmittel einer Modifizierung unterworfen werden.

Die zweite Reaktionsstufe, die kontinuierlich oder diskontinuierlich durchgeführt werden kann, besteht in der Polykondensation des Bis-(2-hydroxyethyl)-terephthalats und dessen Oligomeren zu Polyethylenterephthalat bei z.B. 280-290° C im Vakuum unter Verwendung von bekannten Polykondensationskatalysatoren.

Eine weitere bevorzugte Ausführungsform der Erfindung liegt in der Verwendung von fadenbildenden Polyestern und Copolyestern, bei denen man das oder die Kettenverzweigungsmittel den polyesterbildenden Ausgangskomponenten, im vorliegenden Fall also dem Bis-(2-hydroxyethyl)-terephthalat und dessen Oligomeren, auch vor dieser Schmelzepolykondensation zufügen kann. Ein Zusatz der Kettenverzweigungsmittel im Anfangsstadium der Polykondensationsstufe ist zwar im Prinzip ebenfalls möglich, ist aber weniger empfehlenswert, zumal es sich gezeigt hat, daß sich bei ihrem Zusatz im späteren Polykondensationsstadium mit schwierig abzuschätzenden gleitenden Übergangen mitunter Wechselhaftigkeiten der Garneigenschaften einstellen können.

Das so erfindungsgemäß verwendete kettenverzweigte Polyethylenterephthalat besitzt eine intrinsische Viskosität von 0,70-0,75, was einer relativen Lösungsviskosität von 1,63 bis 1,70 entspricht, gemessen in 1%iger m-Kresol-Lösung bei 20°C. Das Polymer kann mittels üblicher und an sich bekannter Verfahren zu textilen POY-Garnen versponnen werden, die in ebenso bekannter Weise nach ihrer Aufwicklung bei möglichen Aufwickelgeschwindigkeiten von 2500-10000 m/min, bevorzugt von 3000-6000 m/min, weiterverarbeitet werden können, sei es beispielsweise durch anschließendes Verstrecken oder einen simultanen Strecktexturierprozeß oder durch Friktionstexturieren. Verstreckte Garne können ebenso in Einstufen-Spinnverfahren hergestellt werden, wie z.B. Spin Draw Winding, Hot Tube Spinning oder Super High Speed Spinning.

Soll das derart kettenverzweigte Polyethylenterephthalat seine erfindungsgemäße Verwendung bei der Herstellung von industriellen Garnen, z.B. für den Einsatz von Reifenkorden, finden, so muß dessen Molekulargewicht analog wie im Falle des Polyethylenterephthalats erhöht werden. Dies kann nach an sich für das Polyethylenterephthalat entwickelten bekannten Verfahrensweisen erfolgen, einschließlich seiner Umsetzung mit Polymerisationsgraderhöhern, beispielsweise mit 2,2'-bis(2-oxazolin), gemäß EP-A-0 169 415. Die erforderliche Erhöhung der intrinsischen Viskosität bis beispielsweise auf 0,95-1,05, was einer relativen Lösungsviskosität von 1,86 bis 2,05 entspricht, gemessen in 1%iger m-Kresol-Lösung bei 20° C, wird vorzugsweise mittels einer abschließenden Polykondensation in fester Phase bewerkstelligt, wie sie beim Polyethylenterephthalat ebenfalls praktiziert wird. Hierbei wird das gekörnte kettenverzweigte Polyethylenterephthalat im Vakuum oder in einem Inertgasstrom auf Temperaturen unterhalb des Schmelzpunktes erhitzt, z.B. auf 230° C. Für den Einsatz von Reifenkorden wird zur Herstellung der entsprechenden POY-Garne mit Aufwickelgeschwindigkeiten von 2500-10000 m/min, bevorzugt von 3000-6000 m/min, gearbeitet, der sich dann die üblichen Verstreckungs- und Wärmebehandlungsprozesse anschließen.

Die Erfindung wird anhand der nachfolgenden Beispiele näher erläutert:

### A. Herstellung der kettenverzweigten Polyester

Die Herstellung der kettenverzweigten Polyester, und zwar sowohl die mit den Verzweigungsmitteln für die erfindungsgemäße Verwendung als auch die mit Pentaerythrit (= PE) als Vergleichsbeispiele modifizierten, erfolgte nach der nachfolgend beschriebenen standardisierten Polykondensationsvorschrift. Dies gilt auch für die Herstellung von Polyethylenterephthalat (= PET) mit der Maßgabe, daß der Zusatz eines Verzweigungsmittels unterbleibt.

Es wird in einem Zweistufenverfahren Polyethylenterephthalat hergestellt. In der ersten Stufe, der Umesterung, erfolgte die Umsetzung von Ethylenglykol und der gewählten ppm-Menge des entsprechenden Verzweigungsmittels (Dipentaerythrit = DiPE, Tripentaerythrit = TriPE oder Tetrapentaerythrit = TetraPE) mit Dimethylterephthalat (= DMT), wobei das Molverhältnis von Ethylenglykol zu DMT 2,15:1 betrug und die Umesterung in Gegenwart von 100 ppm Zinkacetat (ZnAc₂.2H₂O) und 150 ppm MnAc₂.4H₂O (Ac = Acetat) als Umesterungskatalysatoren, bezogen auf DMT, bei Temperaturen im Bereich von 175 bis 250°C durchgeführt wurde. Dabei wird zur Vermeidung einer Sublimation des DMT die kontinuierliche Temperaturerhöhung von 175 auf 250°C nicht zu rasch vorgenommen. Neben den erwähnten Umesterungskatalysatoren wurden 10 ppm Entschäumungsmittel M 10 zugesetzt.

Das bei der Umesterung freigesetzte Methanol wird über eine Kolonne abdestilliert. Bei Erreichen der Reaktionstemperatur von 240°C werden 50 ppm Phosphor, bezogen auf DMT, in Form des - Phosphonoessigsäureethylesters zur Blockierung der Umesterungskatalysatoren zugesetzt. Beim Erreichen einer Temperatur von 245°C wurden 5000 ppm TiO₂-Suspension in Ethylenglykol als Mattierungsmittel zugesetzt.

Sobald die Reaktionstemperatur von 250°C erreicht war, wurden 400 ppm Sb₂O₃, und zwar als ca. 1%ige Lösung in Ethylenglykol, dem Reaktionsgemisch zugegeben. Die Polykondensationsreaktion erfolgte bei 290°C unter einem Vakuum von 2,4 Torr. Sobald die Schmelze eine relative Lösungsviskosität von ca. 1,64, gemessen in 1%iger m-Kresol-Lösung bei 20°C, erreicht hatte, wurde die Polykondensation beendet.

Die so hergestellten modifizierten und unmodifizierten Polyethylenterephthalate sind in den Tabellen 1 bis 14 aufgeführt.

### B. Schnellspinnen der kettenverzweigten Polyester.

Die gemäß A. hergestellten Polyester wurden nach ihrer Trocknung bis auf eine Restfeuchte von < 0,005% auf einer Spinnmaschine versponnen, die aus einem 2E-Extruder, einem elektrisch beheizten Heizkasten SP 47 und einer Sulzermischereinheit mit 4 Sulzern im Düsenpaket bestand. Die frisch gesponnenen Garne wurden hier einheitlich mittels einer üblichen Queranblasung gekühlt, die natürlich, je nach beabsichtigtem Zweck, andere Fadenabkühlungsmethoden, wie Radialanblasung oder self suction, nicht ausschließt. Die in den Tabellen 1-12 schnellgesponnenen Garne wurden nach ihrer Aufwicklung in einem zweiten Verfahrensschritt verstreckt, die in den Tabellen 13 und 14 schnellgesponnenen Garne nicht. Die wesentlichen Verfahrensparameter, die Eigenschaften der ersponnenen Garne sowie der verstreckten Garne sind in den Tabellen 1 bis 12 bzw. 13 und 14 aufgeführt. Sämtliche Versuche liefen störungsfrei.

Konkret zeigen die Tabellen 1 bis 9 Versuche auf, in denen bei Aufwickelgeschwindigkeiten von 3500 m/min, 4000 m/min und 4500 m/min sowohl unmodifiziertes Polyethylenterephthalat (= PET) als auch kettenverzweigtes Polyethylenterephthalat, das mit 110 ppm und 200 ppm Dipentaerythrit (= DiPE, Tabellen 1-3), mit 110 ppm und 200 ppm Tripentaerythrit (= TriPE, Tabellen 4-6) sowie mit 110 ppm und 200 ppm Tetrapentaerythrit (= TetraPE, Tabellen 7-9) modifiziert worden ist, versponnen wurden. Die gleichen Versuche zeigen die Tabellen 10 bis 12 mit der einzigen Abänderung, daß das Polyethylenterephthalat mit 110 ppm und 200 ppm Pentaerythrit (= PE) modifiziert worden ist. Durch Ablesen der jeweiligen Dehnung der bei gleichen Aufwickelgeschwindigkeiten erhaltenen unverstreckten Garne ist durch Vergleich der Tabellen 1 bis 9 mit den Tabellen 10 bis 12 die kräftige Dehnungssteigerung bei Verwendung der mit Dipentaerythrit, Tripentaerythrit bzw. Tetrapentaerythrit modifizierten Polyethylenterephthalate gegenüber den mit Pentaerythrit modifizierten Polyethylenterephthalaten leicht entnehmbar. Es lassen sich in der Regel Dehnungssteigerungen von über 20% erzielen.

Die Tabellen 13 und 14 zeigen Versuche auf, in denen bei Aufwickelgeschwindigkeiten von 2500 m/min und 4000 m/min a) unmodifiziertes Polyethylenterephthalat, b) mit 500 ppm Dipentaerythrit modifiziertes Polyethylenterephthalat und c) mit 500 ppm Pentaerythrit modifiziertes Polyethylenterephthalat versponnen wurden. Die mit dem Kettenverzweigungsmittel Dipentaerythrit im Vergleich zum Pentaerythrit erzielten Dehnungssteigerungen sind direkt den Einzeltabellen 13 und 14 entnehmbar und betragen 30,2 bzw. 26,6 %.

**Tabelle 1**

| Versuch Nr. | | 1 | 2 | 3 |
|---|---|---|---|---|
| **Polymer** | | PET | PET+110 ppm DiPE | PET+200 ppm DiPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 40,0 | 40,0 | 40,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 115 | 115 | 115 |
| Anblasung | | | | |
| Luftmenge | m³/h | 115 | 115 | 115 |
| Aufwicklung | m/min | 3500 | 3500 | 3500 |

| **Unverstrecktes Garn** | | | | |
|---|---|---|---|---|
| Titer | dtex | 114,7 | 114,4 | 114,1 |
| Festigkeit | cN/tex | 26,7 | 21,2 | 21,3 |
| Dehnung | % | 111,2 | 147,6 | 162,2 |
| Verstreckung | 1: | 1,53 | 1,86 | 1,86 |

| **Verstrecktes Garn** | | | | |
|---|---|---|---|---|
| Titer | dtex | 76, 3 | 63,6 | 63, 0 |
| Festigkeit | cN/tex | 42,1 | 44,3 | 40,8 |
| Dehnung | % | 34,1 | 24,8 | 37,0 |

**Tabelle 2**

| Versuch Nr. | | 4 | 5 | 6 |
|---|---|---|---|---|
| **Polymer** | | PET | PET+110 ppm DiPE | PET+200 ppm DiPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 43,0 | 43,0 | 43,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 120 | 120 | 120 |
| Anblasung | | | | |
| Luftmenge | m³/h | 115 | 115 | 115 |
| Aufwicklung | m/min | 4000 | 4000 | 4000 |

| **Unverstrecktes Garn** | | | | |
|---|---|---|---|---|
| Titer | dtex | 109,9 | 109,2 | 108,5 |
| Festigkeit | cN/tex | 29,7 | 27,2 | 20,6 |
| Dehnung | % | 93,9 | 125,3 | 138,8 |
| Verstreckung | 1: | 1,41 | 1,76 | 1,76 |

| **Verstrecktes Garn** | | | | |
|---|---|---|---|---|
| Titer | dtex | 79,2 | 63,4 | 63,1 |
| Festigkeit | cN/tex | 42,9 | 44,2 | 36,6 |
| Dehnung | % | 32,6 | 22,9 | 28,3 |

**Tabelle 3**

| Versuch Nr. | | 7 | 8 | 9 |
|---|---|---|---|---|
| **Polymer** | | PET | PET+110 ppm DiPE | PET+200 ppm DiPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 45,0 | 45,0 | 45,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 130 | 130 | 130 |
| Anblasung | | | | |
| Luftmenge | m³/h | 115 | 115 | 115 |
| Aufwicklung | m/min | 4500 | 4500 | 4500 |

| **Unverstrecktes Garn** | | | | |
|---|---|---|---|---|
| Titer | dtex | 101,9 | 101,0 | 100,9 |
| Festigkeit | cN/tex | 30,9 | 26,4 | 21,1 |
| Dehnung | % | 79, 6 | 109, 9 | 124,7 |
| Verstreckung | 1: | 1,32 | 1,67 | 1,67 |

| **Verstrecktes Garn** | | | | |
|---|---|---|---|---|
| Titer | dtex | 78,7 | 62,6 | 62,2 |
| Festigkeit | cN/tex | 40,1 | 43,1 | 34,3 |
| Dehnung | % | 34,8 | 21,0 | 26,5 |

**Tabelle 4**

| Versuch Nr. | | 1 | 2 | 3 |
|---|---|---|---|---|
| **Polymer** | | PET | PET+110 ppm TriPE | PET+200 ppm TriPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 40,0 | 40,0 | 40,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 115 | 115 | 115 |
| Anblasung | | | | |
| Luftmenge | m³/h | 115 | 115 | 115 |
| Aufwicklung | m/min | 3500 | 3500 | 3500 |

| **Unverstrecktes Garn** | | | | |
|---|---|---|---|---|
| Titer | dtex | 114,7 | 115,9 | 115,4 |
| Festigkeit | cN/tex | 26,7 | 22,7 | 21,1 |
| Dehnung | % | 111,2 | 135,9 | 162,9 |
| Verstreckung | 1: | 1,53 | 1,84 | 1,90 |

| **Verstrecktes Garn** | | | | |
|---|---|---|---|---|
| Titer | dtex | 76,3 | 64,6 | 61,9 |
| Festigkeit | cN/tex | 42,1 | 45,3 | 40,1 |
| Dehnung | % | 34,1 | 26,1 | 25,4 |

**Tabelle 5**

| Versuch Nr. | | 4 | 5 | 6 |
|---|---|---|---|---|
| **Polymer** | | PET | PET+110 ppm TriPE | PET+200 ppm TriPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 43,0 | 43,0 | 43,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 120 | 120 | 120 |
| Anblasung | | | | |
| Luftmenge | m³/h | 115 | 115 | 115 |
| Aufwicklung | m/min | 4000 | 4000 | 4000 |

| **Unverstrecktes Garn** | | | | |
|---|---|---|---|---|
| Titer | dtex | 109,9 | 108,7 | 108,5 |
| Festigkeit | cN/tex | 29,7 | 23,4 | 19,4 |
| Dehnung | % | 93,9 | 117 | 127,4 |
| Verstreckung | 1: | 1,41 | 1,68 | 1,80 |

| **Verstrecktes Garn** | | | | |
|---|---|---|---|---|
| Titer | dtex | 79,2 | 65,9 | 63, 4 |
| Festigkeit | cN/tex | 42,9 | 42,3 | 36,5 |
| Dehnung | % | 32,6 | 27,7 | 28,4 |

**Tabelle 6**

| Versuch Nr. | | 7 | 8 | 9 |
|---|---|---|---|---|
| **Polymer** | | PET | PET+110 ppm TriPE | PET+200 ppm TriPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 45,0 | 45,0 | 45,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 130 | 130 | 130 |
| Anblasung | | | | |
| Luftmenge | m³/h | 115 | 115 | 115 |
| Aufwicklung | m/min | 4500 | 4500 | 4500 |

| **Unverstrecktes Garn** | | | | |
|---|---|---|---|---|
| Titer | dtex | 101,9 | 100,3 | 100,5 |
| Festigkeit | cN/tex | 30,9 | 25,8 | 20,8 |
| Dehnung | % | 79,6 | 102 | 108, 3 |
| Verstreckung | 1: | 1,32 | 1,58 | 1,64 |

| **Verstrecktes Garn** | | | | |
|---|---|---|---|---|
| Titer | dtex | 78,7 | 65,5 | 63,1 |
| Festigkeit | cN/tex | 40,1 | 39,2 | 35,2 |
| Dehnung | % | 34,8 | 26,0 | 26,7 |

**Tabelle 7**

| Versuch Nr. | | 1 | 2 | 3 |
|---|---|---|---|---|
| **Polymer** | | PET | PET+110 ppm TetraPE | PET+200 ppm TetraPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 40,0 | 40,0 | 40,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 115 | 115 | 115 |
| Anblasung | | | | |
| Luftmenge | m³/h | 115 | 115 | 115 |
| Aufwicklung | m/min | 3500 | 3500 | 3500 |

| **Unverstrecktes Garn** | | | | |
|---|---|---|---|---|
| Titer | dtex | 114,7 | 114,4 | 113,9 |
| Festigkeit | cN/tex | 26,7 | 23,1 | 20,9 |
| Dehnung | % | 111,2 | 138,6 | 159,8 |
| Verstreckung | 1: | 1,53 | 1,82 | 1,90 |

| **Verstrecktes Garn** | | | | |
|---|---|---|---|---|
| Titer | dtex | 76,3 | 63,8 | 60,2 |
| Festigkeit | cN/tex | 42,1 | 44,8 | 40,3 |
| Dehnung | % | 34,1 | 25,0 | 26,1 |

**Tabelle 8**

| Versuch Nr. | | 4 | 5 | 6 |
|---|---|---|---|---|
| **Polymer** | | PET | PET+110 ppm TetraPE | PET+200 ppm TetraPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 43,0 | 43, 0 | 43,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 120 | 120 | 120 |
| Anblasung | | | | |
| Luftmenge | m³/h | 115 | 115 | 115 |
| Aufwicklung | m/min | 4000 | 4000 | 4000 |

| **Unverstrecktes Garn** | | | | |
|---|---|---|---|---|
| Titer | dtex | 109,9 | 109,1 | 108,2 |
| Festigkeit | cN/tex | 29,7 | 25,3 | 20,0 |
| Dehnung | % | 93, 9 | 119,7 | 128,9 |
| Verstreckung | 1: | 1,41 | 1,71 | 1,85 |

| **Verstrecktes Garn** | | | | |
|---|---|---|---|---|
| Titer | dtex | 79,2 | 64,4 | 60,4 |
| Festigkeit | cN/tex | 42,9 | 42,5 | 37,1 |
| Dehnung | % | 32, 6 | 25, 8 | 27,3 |

**Tabelle 9**

| Versuch Nr. | | 7 | 8 | 9 |
|---|---|---|---|---|
| **Polymer** | | PET | PET+110 ppm TetraPE | PET+200 ppm TetraPE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 2 90 |
| Druck | bar | 110 | 110 | 110 |
| Förderung | g/min | 45,0 | 45,0 | 45,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 130 | 130 | 130 |
| Anblasung | | | | |
| Luftmenge | m³/h | 115 | 115 | 115 |
| Aufwicklung | m/min | 4500 | 4500 | 4500 |

| **Unverstrecktes Garn** | | | | |
|---|---|---|---|---|
| Titer | dtex | 101,9 | 100,9 | 100,9 |
| Festigkeit | cN/tex | 30,9 | 26,5 | 21,3 |
| Dehnung | % | 79,6 | 104,2 | 109,6 |
| Verstreckung | 1: | 1,32 | 1,64 | 1,62 |

| **Verstrecktes Garn** | | | | |
|---|---|---|---|---|
| Titer | dtex | 78,7 | 63,9 | 62,7 |
| Festigkeit | cN/tex | 40,1 | 40,1 | 36,2 |
| Dehnung | % | 34,8 | 24,9 | 26,1 |

**Tabelle 10 (Vergleichsversuche)**

| Versuch Nr. | | 1 | 10 | 11 |
|---|---|---|---|---|
| **Polymer** | | PET | PET+110 ppm PE | PET+200 ppm PE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 40,0 | 40,0 | 40,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 115 | 115 | 115 |
| Anblasung | | | | |
| Luftmenge | m³/h | 115 | 115 | 115 |
| Aufwicklung | m/min | 3500 | 3500 | 3500 |

| **Unverstrecktes Garn** | | | | |
|---|---|---|---|---|
| Titer | dtex | 114,7 | 114,3 | 114,2 |
| Festigkeit | cN/tex | 26,7 | 24,3 | 21, 0 |
| Dehnung | % | 111,2 | 122,1 | 133,8 |
| Verstreckung | 1: | 1,53 | 1,58 | 1,67 |

| **Verstrecktes Garn** | | | | |
|---|---|---|---|---|
| Titer | dtex | 76,3 | 72,5 | 68,4 |
| Festigkeit | cN/tex | 42,1 | 40,7 | 41,2 |
| Dehnung | % | 34,1 | 36,1 | 33,4 |

**Tabelle 11 (Vergleichsversuche)**

| Versuch Nr. | | 4 | 12 | 13 |
|---|---|---|---|---|
| **Polymer** | | PET | PET+110 ppm PE | PET+200 ppm PE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 43,0 | 43, 0 | 43, 0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 120 | 120 | 120 |
| Anblasung | | | | |
| Luftmenge | m³/h | 115 | 115 | 115 |
| Aufwicklung | m/min | 4000 | 4000 | 4000 |

| **Unverstrecktes Garn** | | | | |
|---|---|---|---|---|
| Titer | dtex | 109,9 | 109,5 | 109,7 |
| Festigkeit | cN/tex | 29,7 | 26,8 | 23,1 |
| Dehnung | % | 93, 9 | 104,2 | 125,5 |
| Verstreckung | 1: | 1,41 | 1, 67 | 1,76 |

| **Verstrecktes Garn** | | | | |
|---|---|---|---|---|
| Titer | dtex | 79,2 | 65,5 | 63,7 |
| Festigkeit | cN/tex | 42,9 | 43,3 | 42,1 |
| Dehnung | % | 32,6 | 21,2 | 23,0 |

**Tabelle 12 (Vergleichsversuche)**

| Versuch Nr. | | 7 | 14 | 15 |
|---|---|---|---|---|
| **Polymer** | | PET | PET+110 ppm PE | PET+200 ppm PE |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 45,0 | 45,0 | 45,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 130 | 130 | 130 |
| Anblasung | | | | |
| Luftmenge | m³/h | 115 | 115 | 115 |
| Aufwicklung | m/min | 4500 | 4500 | 4500 |

| **Unverstrecktes Garn** | | | | |
|---|---|---|---|---|
| Titer | dtex | 101,9 | 100,8 | 101,2 |
| Festigkeit | cN/tex | 30,9 | 28,5 | 26,9 |
| Dehnung | % | 79, 6 | 89,2 | 103,7 |
| Verstreckung | 1: | 1, 32 | 1,41 | 1,67 |

| **Verstrecktes Garn** | | | | |
|---|---|---|---|---|
| Titer | dtex | 78,7 | 71,4 | 62,8 |
| Festigkeit | cN/tex | 40,1 | 43, 6 | 42,9 |
| Dehnung | % | 34,8 | 28,2 | 20,5 |

**Tabelle 13**

| Versuch Nr. | | 16 | 17 | 18 |
|---|---|---|---|---|
| **Polymer** | | PET | PET+500 ppm DiPE | PET+500 ppm PE (Vergleich) |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 45,0 | 45,0 | 45, 0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 115 | 115 | 115 |
| Anblasung | | | | |
| Luftmenge | m³/h | 115 | 115 | 115 |
| Aufwicklung | m/min | 2500 | 2500 | 2500 |

| **Unverstrecktes Garn** | | | | |
|---|---|---|---|---|
| Titer | dtex | 186,6 | 181,4 | 182,2 |
| Festigkeit | cN/tex | 20,6 | 13,7 | 18,7 |
| Dehnung | % | 185,2 | 222,3 | 192,1 |

**Tabelle 14**

| Versuch Nr. | | 4 | 19 | 20 |
|---|---|---|---|---|
| **Polymer** | | PET | PET+500 ppm DiPE | PET+500 ppm PE (Vergleich) |
| Extruder | | | | |
| Temperaturzone 1 | °C | 295 | 295 | 295 |
| Temperaturzone 2 | °C | 293 | 293 | 293 |
| Temperaturzone 3 | °C | 290 | 290 | 290 |
| Druck | bar | 110 | 110 | 110 |
| Förderung | g/min | 43,0 | 43,0 | 43,0 |
| Temperatur: | | | | |
| Leitung | °C | 295 | 295 | 295 |
| Heizkasten | °C | 310 | 310 | 310 |
| Düsenlochzahl | | 24 | 24 | 24 |
| Lochdurchmesser | µm | 250 | 250 | 250 |
| Düsendruck | bar | 120 | 120 | 120 |
| Anblasung | | | | |
| Luftmenge | m³/h | 115 | 115 | 115 |
| Aufwicklung | m/min | 4000 | 4000 | 4000 |

| **Unverstrecktes Garn** | | | | |
|---|---|---|---|---|
| Titer | dtex | 109,9 | 109,2 | 109,7 |
| Festigkeit | cN/tex | 29,7 | 13,1 | 21,2 |
| Dehnung | % | 93, 9 | 160,6 | 134,0 |

## Patentansprüche

1. Verwendung von fadenbildenden, ketten verzweigten Polyestern und Copolyestern mit einem relativen Molekulargewicht von >10000, die sehr geringe Mengen Kettenverzweigungsmittel enthalten, erhalten durch Einkondensation von 50-500 ppm eines oder mehrerer, während der Polyesterherstellung hinzugefügter Kettenverzweigungsmittel der allgemeinen Formel 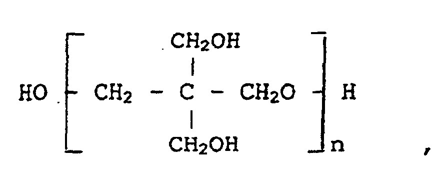 worin n = 2-4 bedeutet, in den polyesterbildenden Ausgangskomponenten, zum Schnellspinnen von textilen und industriellen Garnen mit Aufwickelgeschwindigkeiten von 2500 - 10 000 m/min, woran sich übliche Verstreckungs- oder Texturierprozesse anschließen.

2. Verwendung der Polyester und Copolyester nach Anspruch 1 zum Schnellspinnen von textilen und industriellen Garnen mit Aufwickelgeschwindigkeiten von 3000 - 6000 m/min, woran sich übliche Verstreckungs- oder Texturierprozesse anschließen.

3. Verwendung von Polyestern und Copolyestern nach Anspruch 1 oder 2, erhalten durch Einkondensation von 80-350 ppm Dipentaerythrit.

4. Verwendung von Polyestern und Copolyestern nach Anspruch 1 oder 2, erhalten durch Einkondensation von 100-250 ppm Dipentaerythrit.

5. Verwendung von Polyestern und Copolyestern nach Anspruch 1 oder 2, erhalten durch Einkondensation von 50 - 200 ppm Tripentaerythrit oder Tetrapentaerythrit.

6. Verfahren zum Spinnen von textilen und industriellen Garnen, indem zunächst fadenbildende, kettenverzweigte Polyester und Copolyester mit einem relativen Molekulargewicht von > 10000 gebildet werden, die sehr geringe Mengen Kettenverzweigungsmittel enthalten, erhalten durch Einkondensation von 50-500 ppm eines oder mehrerer, während der Polyesterherstellung hinzugefügter Kettenverzweigungsmittel der allgemeinen Formel 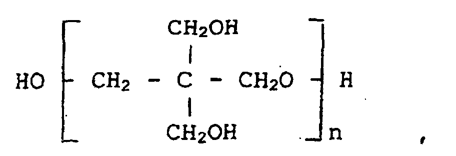 worin n = 2-4 bedeutet, in den polyesterbildenden Ausgangskomponenten, **dadurch gekennzeichnet, daß** die Garne mit Aufwickelgeschwindigkeiten von 2500 - 10 000 m/min gesponnen werden, woran sich übliche Verstreckungs- oder Texturierprozesse anschließen.

7. Verfahren nach Anspruch 6, **dadurch gekennzeichnet; daß** die Garne mit Aufwickelgeschwindigkeiten von 3000 bis 6000 m/min gesponnen werden, woran sich übliche Verstreckungsoder Texturierprozesse anschließen.

8. Verfahren nach Anspruch 6 oder 7, **dadurch gekennzeichnet, daß** man den polyesterbildenden Ausgangskomponenten 80-350 ppm Dipentaerythrit zufügt.

9. Verfahren nach Anspruch 6 oder 7, **dadurch gekennzeichnet, daß** man den polyesterbildenden Ausgangskomponenten 100-250 ppm Dipentaerythrit zufügt.

10. Verfahren nach Anspruch 6 oder 7, **dadurch gekennzeichnet, daß** man den polyesterbildenden Ausgangskomponenten 50-200 ppm Tripentaerythrit oder Tetrapentaerythrit zufügt.

11. Verfahren nach einem oder mehreren der Ansprüche 6 bis 10, **dadurch gekennzeichnet, daß** man ein oder mehrere Kettenverzweigungsmittel solchen polyesterbildenden Ausgangskomponenten zufügt, die zur Bildung von Polyethylenterephthalat, Polypropylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) oder deren Mischpolyester auf der Basis hoher Homopolyester-Anteile von mindestens 90 Molprozent führen.

12. Verfahren nach einem oder mehreren der Ansprüche 6 bis 11, **dadurch gekennzeichnet, daß** man das oder die Kettenverzweigungsmittel den polyesterbildenden Ausgangskomponenten vor ihrer Schmelzepolykondensation zufügt.

13. Verfahren nach einem oder mehreren der Ansprüche 6 bis 11, **dadurch gekennzeichnet, daß** man das oder die Kettenverzweigungsmittel den polyesterbildenden Ausgangskomponenten vor oder während der Umesterungsreaktion oder Direktveresterung zufügt.

14. Verfahren nach einem oder mehreren der Ansprüche 6 bis 13, **dadurch gekennzeichnet, daß** man vorhandene Umesterungskatalysatoren aus der ersten Reaktionsstufe nach der erfolgten Umesterung durch Zugabe von einer oder mehreren Phosphorverbindungen blockiert.

15. Verfahren nach Anspruch 14, **dadurch gekennzeichnet, daß** als Blockierungsmittel Carbethoxy-methyl-diethylphosphonat, Di(polyoxyethylen)hydroxy-methylphosphonat, Tetraisopropylmethylen-diphosphonat, Phosphonoessigsäure-ethylester und/oder H3PO4 eingesetzt werden.

## Claims

1. Use of filament-forming chain-branched polyesters and copolyesters with a relative molecular weight of > 10000, containing very small amounts of chain-branching agents and obtained by condensing in 50-500 ppm of one or more chain-branching agents, added during the polyester manufacture and having the general formula 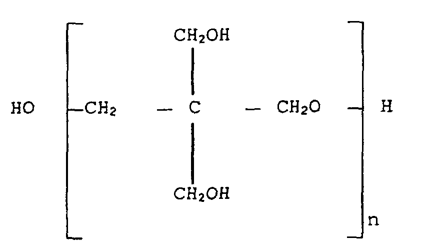 where n = 2-4, in the polyester-forming starting components for high-speed spinning of textile and industrial yams with winding speeds of 2500-10 000 m/min., followed by conventional drawing or texturizing processes.

2. Use of the polyesters and copolyesters in accordance with Claim 1 for high-speed spinning of textile and industrial yarns with winding speeds of 3000-6000 m/min., followed by conventional drawing or texturizing processes.

3. Use of polyesters and copolyesters according to Claims 1 or 2, obtained by condensing in 80-350 ppm dipentaerythritol.

4. Use of polyesters and copolyesters in accordance with Claims 1 or 2, obtained by condensing in 100-250 ppm dipentaerythritol.

5. Use of polyesters and copolyesters in accordance with Claims 1 or 2, obtained by condensing in 50-200 ppm tripentaerythritol or tetrapentaerythritol.

6. Process for spinning of textile and industrial yarns by initially producing filament-forming chain-branched polyesters and copolyesters with a relative molecular weight of > 10000, containing very small amounts of chain-branching agents, obtained by condensing in 50-500 ppm of one or more chain-branching agents, added during polyester manufacture and having the general formula 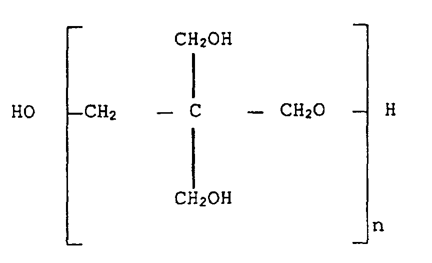 where n = 2-4, in the polyester-forming starting components, **characterized in that** the yarns are spun with winding speeds of 2500-10 000 m/min., followed by conventional drawing or texturizing processes.

7. Process in accordance with Claim 6, **characterized in that** the yarns are spun with winding speeds of 3000 to 6000 m/min., followed by conventional drawing or texturizing processes.

8. Process in accordance with Claims 6 or 7, **characterized in that** 80-350 ppm dipentaerythritol is added to the polyester-forming starting components.

9. Process in accordance with Claims 6 or 7, **characterized in that** 100-250 ppm dipentaerythritol is added to the polyester-forming starting components.

10. Process in accordance with Claims 6 or 7, **characterized in that** 50-200 ppm tripentaerythritol or tetrapentaerythritol is added to the polyester-forming starting components.

11. Process in accordance with one or more of Claims 6 to 10, **characterized in that** one or more chain-branching agents are added to those polyester-forming starting components that result in the formation of polyethylene terephthalate, polypropylene terephthalate, polybutylene terephthalate, poly(ethylene-2,6-naphthalene dicarboxylate), poly(butylene-2,6-naphthalene dicarboxylate), poly(1,4-dimethylene-cyclohexane terephthalate) or their polyester blends on the basis of high homopolyester fractions of at least 90 mole percent.

12. Process in accordance with one or more of Claims 6 to 11, **characterized in that** the chain-branching agent or agents is/are added to the polyester-forming starting components before their melt polycondensation.

13. Process in accordance with one or more of Claims 6 to 11, **characterized in that** the chain-branching agent or agents is/are added to the polyester-forming starting components before or during the transesterification reaction or the direct esterification.

14. Process in accordance with one or more of Claims 6 to 13, **characterized in that** any existing transesterification catalysts from the first reaction stage are blocked, after the transesterification has ended, by adding one or more phosphorus compounds.

15. Process in accordance with Claim 14, **characterized in that** carbethoxymethyl diethyl phosphonate, di(polyoxyethylene)-hydroxymethyl phosphonate, tetraisopropyl methylene diphosphonate, phosphonoacetic acid ethyl ester and/or H₃PO₄ are used as blocking agents.

## Revendications

1. Utilisation de polyesters et copolyesters à chaîne ramifiée, filables, ayant une masse moléculaire relative supérieure à 10 000, contenant de très faibles quantités d'agent de ramification, obtenus par copolycondensation, avec les composants formant le polyester, de 50 - 500 ppm d'un ou de plusieurs agents de ramification ajouté(s) pendant la synthèse du polyester et correspondant à la formule générale
HO-[CH₂-C(CH₂OH)₂-CH₂O]ₙH
dans laquelle n = 2 - 4, pour le filage rapide de fils textiles et industriels à des vitesses d'embobinage comprises entre 2500 et 10 000 m/min, l'étape de filage étant suivie d'étapes d'étirage ou de texturation usuelles.

2. Utilisation des polyesters et copolyesters selon la revendication 1, pour le filage rapide de fils textiles et industriels à des vitesses d'embobinage comprises entre 3000 et 6000 m/min, l'étape de filage étant suivie d'étapes d'étirage et de texturation usuelles.

3. Utilisation de polyesters et copolyesters selon la revendication 1 ou 2, obtenus par copolycondensation de 80 à 350 ppm de dipentaérythritol.

4. Utilisation de polyesters et copolyesters selon la revendication 1 ou 2, obtenus par copolycondensation de 100 à 250 ppm de dipentaérythritol.

5. Utilisation de polyesters et copolyesters selon la revendication 1 ou 2, obtenus par copolymérisation de 50 à 200 pm de tripentaérythritol ou de tétrapentaérythritol.

6. Procédé de filage de fils textiles ou industriels, dans lequel on forme d'abord des polyesters et copolyesters à chaîne ramifiée, filables, ayant une masse moléculaire relative supérieure à 10 000, contenant de très faibles quantités d'agent de ramification, obtenus par copolycondensation de 50 à 500 ppm d'un ou de plusieurs agents de ramification ajoutés pendant la synthèse du polyester et correspondant à la formule générale
HO-[CH₂-C(CH₂OH)₂-CH₂O]ₙH
dans laquelle n = 2 - 4, **caractérisé par le fait que** les fils sont filés à des vitesses d'embobinage comprises entre 2500 et 10 000 m/min, l'étape de filage étant suivie d'étapes d'étirage et de texturation usuelles.

7. Procédé selon la revendication 6, **caractérisé par le fait que** les fils sont filés à des vitesses d'embobinage comprises entre 3000 et 6000 m/min, l'étape de filage étant suivie d'étapes d'étirage et de texturation usuelles.

8. Procédé selon la revendication 6 ou 7, **caractérisé par le fait que** l'on ajoute aux composants de départ formant le polyester de 80 à 350 ppm de dipentaérythritol.

9. Procédé selon la revendication 6 ou 7, **caractérisé par le fait que** l'on ajoute aux composants de départ formant le polyester de 100 à 250 ppm de dipentaérythritol.

10. Procédé selon la revendication 6 ou 7, **caractérisé par le fait que** l'on ajoute aux composants de départ formant le polyester de 50 à 200 ppm de tripentaérythritol ou de tétrapentaérythritol.

11. Procédé selon l'une ou plusieurs des revendications 6 à 10, **caractérisé par le fait que** l'on ajoute un ou plusieurs agent(s) de ramification à des composants de départ formant des polyesters donnant du poly(éthylène téréphtalate), du poly(propylène téréphtalate), du poly(butylène téréphtalate), du poly(éthylène-2,6-naphtalène-dicarboxylate), du poly(1,4-diméthylènecyclohexane téréphtalate) ou des polyesters mixtes de ceux-ci contenant au moins 90 % en moles de séquences homopolyesters.

12. Procédé selon une ou plusieurs des revendications 6 à 11, **caractérisé par le fait que** l'on ajoute le ou les agent(s) de ramification aux composants de départ formant des polyesters avant l'étape de polycondensation à l'état fondu.

13. Procédé selon l'une ou plusieurs des revendications 6 à 11, **caractérisé par le fait que** l'on ajoute le ou les agent(s) de ramification aux composants de départ formant des polyesters avant ou pendant l'étape de transestérification ou d'estérification directe.

14. Procédé selon l'une ou plusieurs des revendications 6 à 13, **caractérisé par le fait que** l'on bloque des catalyseurs de transestérification, présents à la fin de la première étape réactionnelle de transestérification, par addition d'un ou de plusieurs composé(s) de phosphore.

15. Procédé selon la revendication 14, **caractérisé par le fait que** l'on utilise en tant qu'agent de blocage du carbéthoxyméthyldiéthylphosphonate, du di(polyoxyéthylène)hydroxyméthylphosphonate, du tétraisopropylméthylènediphosphonate, du phosphonate d'éthyle et/ou du H₃PO₄.
